# EUROPEAN PATENT SPECIFICATION

(11) **EP 3 602 728 B1**
(45) Date of publication and mention of the grant of the patent: **09.11.2022**
(21) Application number: 18758771.2
(22) Date of filing: 23.07.2018
(51) Int. Cl.: H02J 7/00, H02J 9/00, G06F 1/16, G06F 1/32, H04R 1/10

(54) **SYSTEM AND METHOD FOR RESTRICTING AND ENABLING CHARGING**
SYSTEM UND VERFAHREN ZUR BESCHRÄNKUNG UND ERMÖGLICHUNG DES LADENS
SYSTÈME ET PROCÉDÉ DE RESTRICTION ET D'ACTIVATION DE CHARGE

(30) Priority: 25.10.2017 US 201762576901 P
(43) Date of publication of application: 05.02.2020
(73) Proprietor: Google LLC, Mountain View, CA 94043 (US)
(72) Inventor: CHAMPY, Adam, Mountain View, CA 94043 (US)
(74) Representative: Maikowski & Ninnemann Patentanwälte Partnerschaft mbB
(86) International application number: PCT/US2018/043300
(87) International publication number: WO 2019/083584

(56) References cited:
- US-A1- 2013 227 312
- US-A1- 2017 064 437
- US-B1- 8 635 481

## Description

### BACKGROUND

Consumers may prefer that purchased electronic devices be in a fully charged state when initially removed from the packaging, so that the consumers can immediately begin using the devices. However, devices that are shipped in a charged state may drain over time. Moreover, some shipping regulations prohibit charging of devices during transit, such as while flying on an airplane. This would prohibit, for example, a battery of a larger device such as a case from charging the battery of a smaller device such as earbuds. US 2017/064437 A1 discloses a smart case for wireless earpieces including a battery in the smart case charging a battery in the earpieces.

### BRIEF SUMMARY

The proposed solution relates to a method according to claim 1 and a system according to claim 8.

### BRIEF DESCRIPTION OF THE DRAWINGS

Fig. 1 is a functional block diagram illustrating an example electronic device according to aspects of the disclosure.
Fig. 2 is a functional block diagram of another example electronic device according to aspects of the disclosure.
Fig. 3 is a pictorial diagram of an example electronic device according to aspects of the disclosure.
Fig. 4 is a flow diagram illustrating an example method according to aspects of the disclosure.
Fig. 5 is a pictorial diagram illustrating an example of different conditions and corresponding states of the electronic device according to aspects of the disclosure.
Figs. 6A-B are pictorial diagrams illustrating further examples of shipping conditions detectable by the electronic device according to aspects of the disclosure.

### DETAILED DESCRIPTION

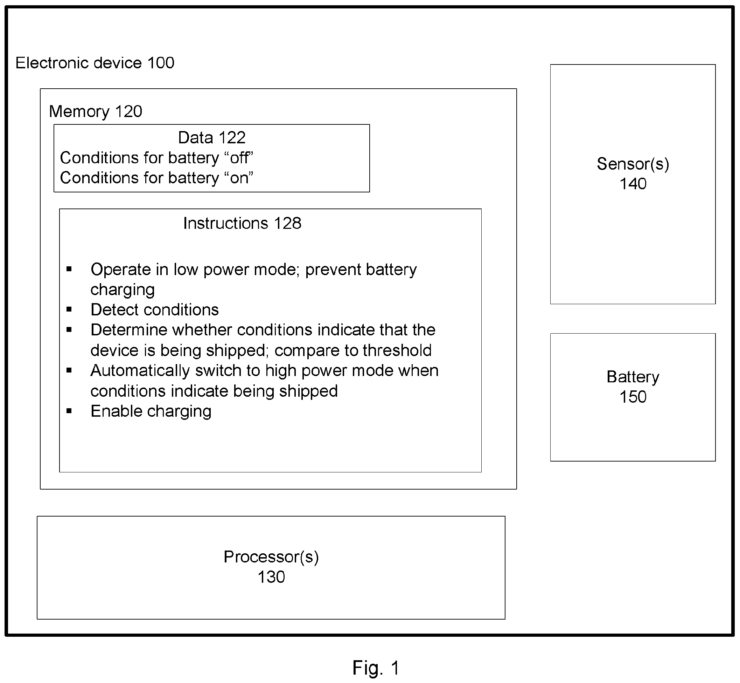

FIG. 1 illustrates an example electronic device 100 adapted to determine when the device is in transit and respond accordingly. The device 100 may be, for example, any device with a chargeable battery, such as a mobile phone, video game player, earbuds, headset, head-mounted computing device, hands-free communication device, tablet, laptop, etc. In some examples, the device may be a smart battery which is adapted to charge a plurality of other nearby electronic devices.

The electronic device 100 includes one or more processors 130, one or more memories 120, as well as other components. For example, the computing device 100 includes one or more sensors 140 and a battery 150.

The memory 120 may store information accessible by the one or more processors 130, including data 122 instructions 128 that may be executed or otherwise used by the one or more processors 130. For example, memory 120 may be of any type capable of storing information accessible by the processor(s), including a computing device-readable medium, or other medium that stores data that may be read with the aid of an electronic device, such as a volatile memory, non-volatile as well as other write-capable and read-only memories. By way of example only, memory 120 may be a static random-access memory (SRAM) configured to provide fast lookups. Systems and methods may include different combinations of the foregoing, whereby different portions of the instructions and data are stored on different types of media.

The data 122 may be retrieved, stored or modified by the one or more processors 130 in accordance with the instructions 128. For instance, data 122 may include an identification of conditions which indicate either that the device 100 should be in a first state or a second state. A first set of conditions indicates that the device 100 should be in a low power state or a battery non-charging state. A second set of conditions, however, indicates that the device 100 should be in a high power state or a battery charging state. In accordance with the instructions 128, the device detects conditions surrounding the device, such as by using the one or more sensors 140, and remains in or switches to a corresponding mode. Although the claimed subject matter is not limited by any particular data structure, the data may be stored in computing device registers, in a relational database as a table having a plurality of different fields and records, XML documents or flat files. The data may also be formatted in any computing device-readable format.

The instructions 128 may be any set of instructions to be executed directly (such as machine code) or indirectly (such as scripts) by the one or more processors 130. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The one or more processors 130 may be microprocessors, logic circuitry (e.g., logic gates, flip-flops, etc.) hard-wired into the device 100 itself, or may be a dedicated application specific integrated circuit (ASIC). It should be understood that the one or more processors 130 are not limited to hard-wired logic circuitry, but may also include any commercially available processing unit, or any hardware-based processors, such as a field programmable gate array (FPGA). In some examples, the one or more processors 130 may include a state machine.

The one or more sensors 140 may include any of a variety of mechanical or electromechanical sensors, such as an accelerometer, gyroscope, switch, light sensor, barometer, audio sensor (e.g., microphone), vibration sensor, heat sensor, radio frequency (RF) sensor, etc. In this regard, the device 100 may detect conditions indicating that the device is being shipped using a variety of methods. For example, an accelerometer may detect a particular orientation which corresponds to the orientation in which the device will be packaged and shipped. Accordingly, the device will remain in the first mode, and, for example, prevent charging of the battery 150. When the accelerometer detects a different orientation or a particular angular rotation, the device may determine that shipping is complete and thus transition to the second mode. When transitioning to the second mode, for example, the battery 150 may accept a charge from another device or provide a charge to another device. In some examples, the different orientation or angular rotation must be detected for a threshold period of time before transitioning to the second mode. This may prevent unintended transitioning, such as if an aircraft is experiencing turbulence. Just as another example, a light sensor may detect that ambient light is below a threshold level, thus indicating that the device is packed in a dark shipping box. When shipping is complete and the device is unboxed for a predetermined period of time, the light sensor may detect a light level that exceeds the threshold, and thus transition to the second mode. It should be understood that these are merely a few examples of how the sensors may be used to determine the shipping status of the device and to automatically change the state of the device in response, but that many other example implementations are possible.

Although FIG. 1 functionally illustrates the processor, memory, and other elements of device 100 as being within the same block, it will be understood by those of ordinary skill in the art that the processor and memory may actually include multiple processors and memories that may or may not be stored within the same physical housing. For example, memory 120 may be a volatile memory or other type of memory located in a casing different from that of computing device 100. Moreover, the various components described above may be part of one or more electronic devices.

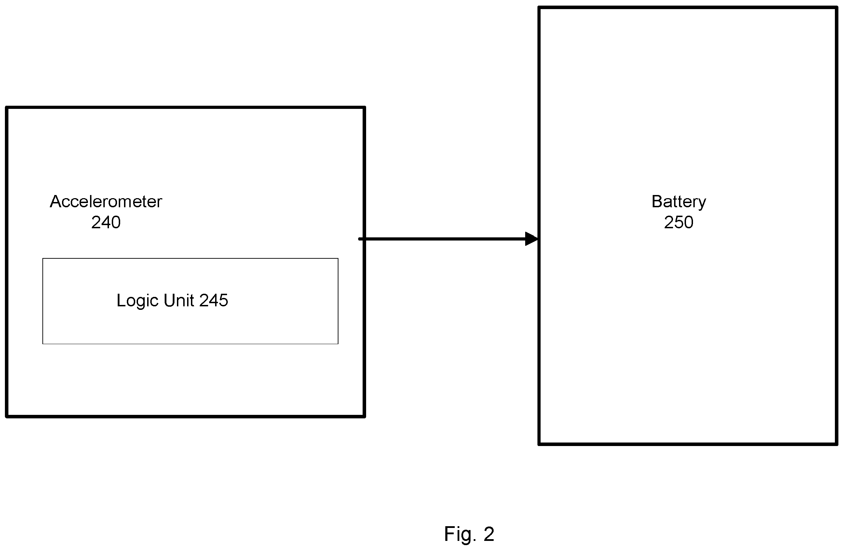

In the example of Fig. 1 described above, the accelerometer is in communication with the one or more processors and operated to detect conditions and trigger responses in coordination with the one or more processors. Fig. 2 illustrates another example of components within electronic device 100, wherein accelerometer 240 is a sophisticated sensor including its own logic unit 245. As such, the logistics for detecting particular conditions corresponding to shipping are found within the accelerometer 240. When the accelerometer 240 detects that the device is being shipped, it may communicate directly or indirectly with the battery 250 to prevent charging of the battery 250. In some examples no action or communication is needed at this stage, for example, if the device is already set to a low power or non-charging mode. When the accelerometer 240 detects that conditions indicating that shipping has ended, it may communicate directly or indirectly with the battery 250 to trigger charging of the battery 250.

While the example of Fig. 2 is described with regard to the logic unit 245 being within the accelerometer 240, it should be understood that the logic unit 245 may be within any type of advanced sensor. Moreover, in some examples, multiple sensors of different types may detect conditions simultaneously and communicate with each other or another device to determine whether to switch modes. For example, an accelerometer, gyroscope, and light sensor may each detect conditions. These devices may each communicate with each other. For example, the accelerometer may serve a leader role, and the gyroscope and light sensor may communicate detected conditions to the accelerometer. The accelerometer, or other device in leadership role, may determine when a particular combination of conditions are detected, and trigger transitioning of the device into the second mode in response.

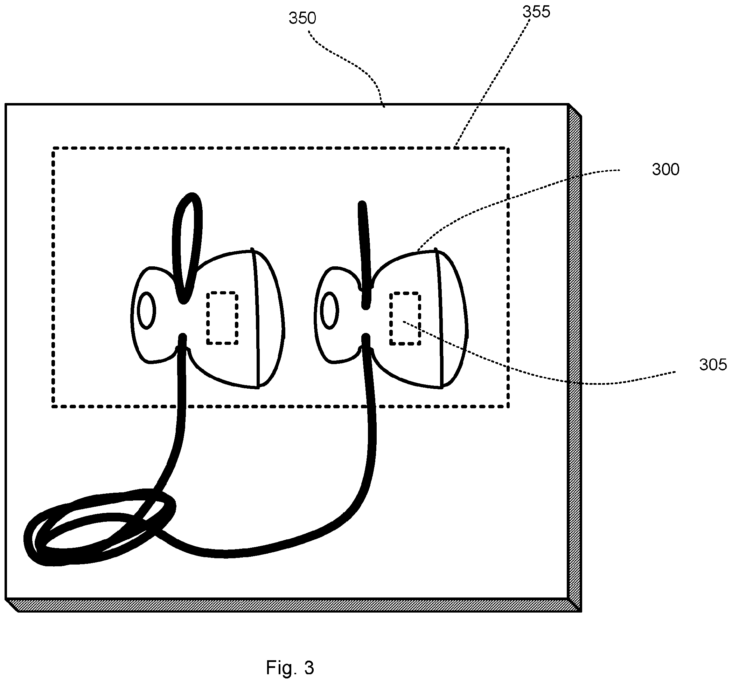

Fig. 3 illustrates an example of a first electronic device which is charged by a second electronic device. The first electronic device, as shown in this example, is a pair of earbuds 300. The earbuds 300 may be wireless in that they do not require a wired connection to a music player, phone, or other device to be powered. In other examples, the earbuds may be fully wireless, such that each earbud is untethered to the other. The earbuds 300 include one or more batteries 305 which provide power to the earbuds 300 and other components therein, such as transmitters, receivers, amplifiers, etc. The batteries 305 of the earbuds 300 are relatively small, in view of the small size of the earbuds 300. A case 350 in which the earbuds 300 are shipped and stored, however, may have a larger battery 355. This larger battery 355 of the case 350 may deliver a charge to the smaller batteries 305 of the earbuds 300. However, following the examples described above in connection with Figs. 1 and 2, the earbuds 300 and/or the case 350 include one or more sensors which detect conditions, such as orientation, light, sound, pressure, heat, RF signals, etc. Upon detection of conditions which indicate that the earbuds 300 are being shipped, and should remain in a low power mode, the battery 355 of the case 350 will not deliver a charge to the batteries 305 of the earbuds 300. However, if either or both of the earbuds 300 or the case 350 detect a change in conditions indicating that the device has finished shipping, the battery 355 of the case 350 begins delivering a charge to the batteries 305 of the earbuds 300.

While the example above describes an electronic case charging a pair of earbuds upon detection of conditions triggering entry into a second mode, it should be understood that any of a variety of types of devices may detect such conditions and trigger charging of one device by another. By way of example only, the devices may include mobile phones, wireless chargers, smartwatches, head-mounted displays, tablets, etc.

In addition to the operations described in connection with the systems above, various operations will now be described in connection with example methods. It should be understood that the following operations do not have to be performed in the precise order described below. Rather, various operations can be handled in a different order or simultaneously.

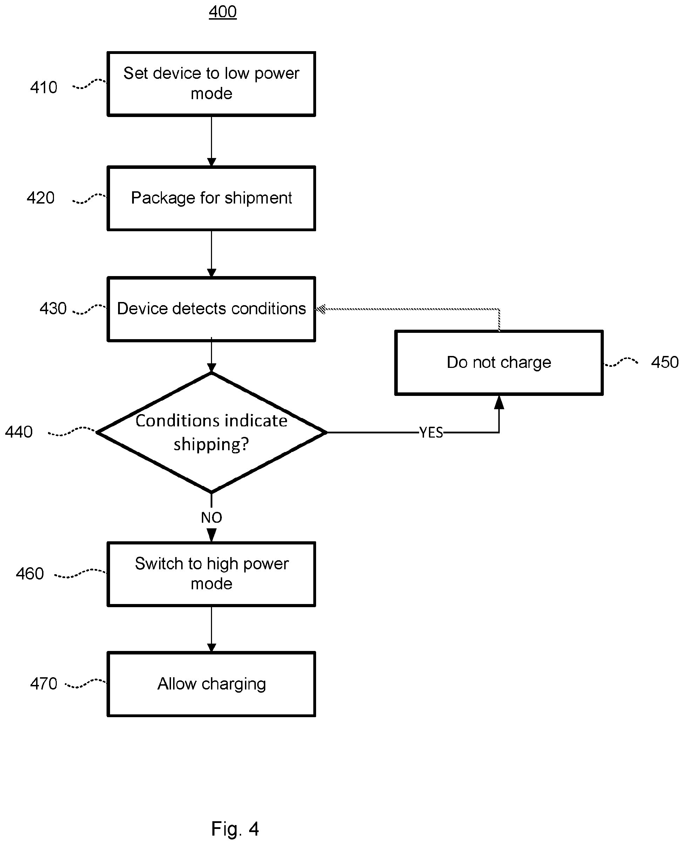

FIG. 4 provides a flow diagram illustrating an example method 400 of determining a shipping status of an electronic device and automatically setting a mode of the electronic device in response. The device may include any type of electronic device, such as earbuds, a phone, phone accessories, toys, gaming systems, tablets, etc.

In block 410, the electronic device is set to a low power mode prior to packaging. A battery of the electronic device may be fully charged, but maintaining the device in low power mode will help to retain the charge over time. In the low power mode, only a minimal amount of power is needed, for example, to periodically check a status of the device. Other functions requiring more power may be disabled. For example, where the device is a case for a pair of earbuds, electronic communication between the case and the earbuds may be disabled in the low power mode.

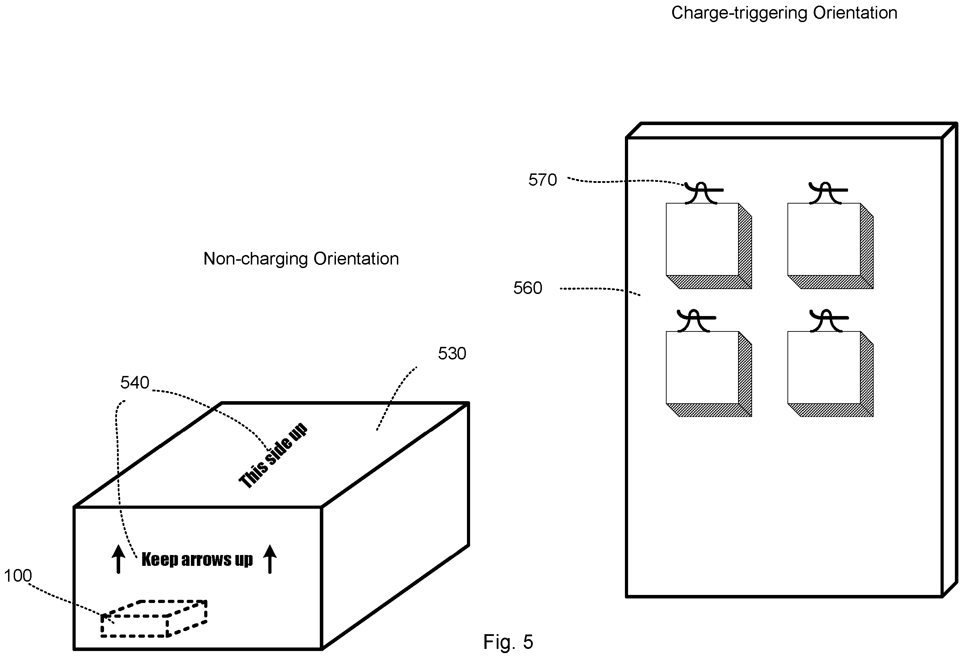

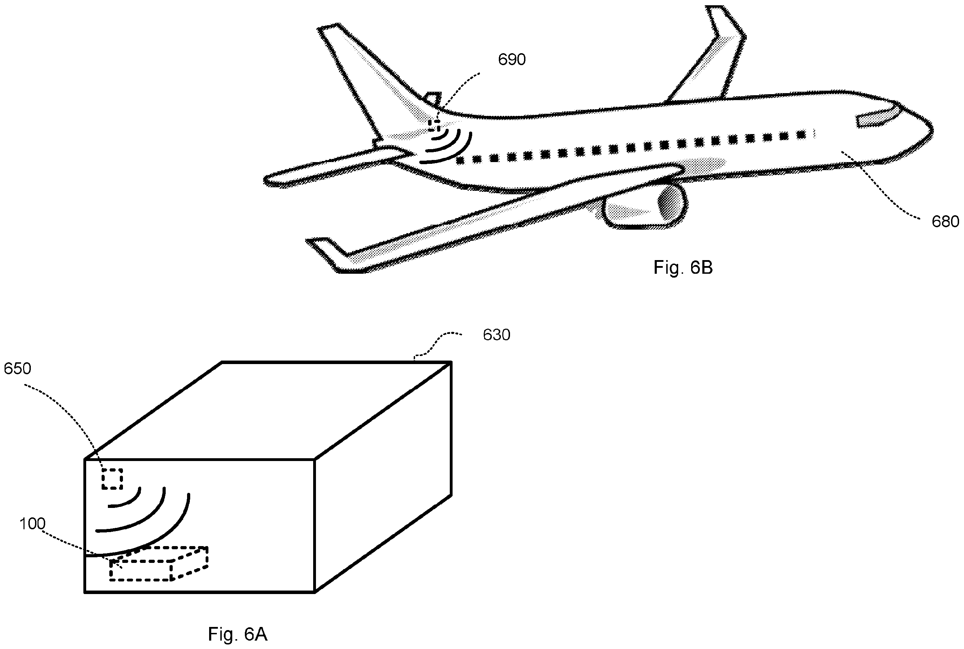

In block 420, the electronic device is packaged for shipment. According to some examples, the device may be intentionally placed into a shipping box or container in a predefined orientation, wherein the device associates the predefined orientation with the low power mode and/or a non-charging mode. By way of example only, the device may be laid in a horizontal position as further described in the example of Fig. 5 below. According to other examples, such as those described in further detail below in connection with Fig. 6, the shipping box or container may include transmitter emitting an RF or other communication beacon that is detected by the electronic device. The electronic device may associate detection of the beacon with shipment, and thus remain in the low power mode.

In block 430, the electronic device detects conditions surrounding it. The device may detect such conditions periodically, such as every few minutes or seconds. Detected conditions include, for example, orientation or the beacon. In other examples, detected conditions include an amount of light or sound. In addition, detected conditions may include air pressure, vibration, heat, status of a physical switch, presence of a pull-tab, or any other condition which may be made to vary between times of shipping and times of consumer use.

In block 440, the electronic device determines whether the detected conditions indicate that the device is currently being shipped. For example, as described above in connection with Figs. 1-2, the device may store in its memory a correlation between particular conditions and a corresponding status. In some examples, the status may be determined based on a combination of detected conditions, such as light plus pressure, sound plus heat, etc. In other examples, the device may determine that it is being shipped if any presently detected conditions have not changed from its original packaging conditions.

In some instances, the detected conditions indicating a status of being in shipment must be detected for a threshold period of time. For example, a change in conditions may be required for several seconds, minutes, hours, etc., for the device to determine that it is no longer being shipped. The threshold period of time may be set based on, for example, the type of condition that triggers a change in mode, a size or shape of the electronic device, a size or shape of the packaging, an expected method of shipment, etc. By comparing a timeframe during which the change in conditions is detected to the threshold, premature charging may be prevented. For example, if the change in conditions is caused by turbulence on a cargo plane, a time period during which the conditions remained changed may not meet the threshold time period, and thus the device would not incorrectly determine that shipping was complete or prematurely enter into a high power mode.

If the device determines in block 440 that it is currently being shipped, the device remains in the low power mode. Moreover, the device does not charge (block 450). For example, the device prevents charging of its own battery by another device, and/or it prevents its own battery from delivering a charge to any other devices.

If the conditions detected in block 430 do not indicate shipping in block 440, the device in block 460 automatically switches to a high power mode in response. In the high power mode, additional features of the electronic device may be activated, as compared to the low power mode. The high power mode may be, for example, a mode in which the device is ready for full operation by a consumer.

In some examples, the device further allows charging of its own battery or other nearby batteries (block 470) once it is determined that shipping is complete.

Fig. 5 illustrates just one example of different conditions detected by the electronic device and a change in a state of the device in response. As shown, the device 100 is packaged in a box 530 in a predetermined orientation. In the example shown, the predetermined orientation is lying flat horizontally. However, it should be understood that any orientation may be selected as the predetermined packaging orientation, and the device may be programmed accordingly. Examples of other possible orientations include horizontal, angularly skewed, etc. When the electronic device 100 detects that it is in the predetermined orientation, it determines that it is currently being shipped. Accordingly, it remains in a mode in which it was packed, such as a low power mode. In the low power mode, the device 100 may only perform limited functions, such as determining its surrounding conditions (e.g., orientation), while turning off other functions, such as wireless communication etc. In some examples, in this mode a battery of the electronic device 100 does not receive or deliver a charge to another electronic device. For example, referring back to the earbuds example of Fig. 3, batteries 305 of the earbuds 300 would not accept a charge from battery 355 of the case 350, and/or the battery 355 of the case 350 would not attempt to deliver a charge to the batteries 305 of the earbuds 300.

Shipping box 530 may include markings 540 to help ensure that the device 100 is maintained in the predetermined orientation throughout shipping. For example, the markings 540 may indicate how the box 530 should be oriented during transit. The markings 540 shown, which read "This side up" and "Keep arrows up," are merely examples of the types of markings that may be placed on the box 530. Additionally or alternatively to the marking 540, other mechanisms for ensuring maintenance of the device 100 in the predetermined orientation during transit may be used, such as handles, tracks, audible alerts, etc.

Referring back to Fig. 5, once shipping has been completed the electronic device 100 may be taken out of the shipping box 530 and arranged on a display 560. On the display 560, the device 100 may be hung on a hook 570, place upright on a shelf (not shown), or otherwise oriented in a vertical position. Detecting that the orientation has changed, the device 100 switches to a second mode different from the shipping mode in which it was originally packaged. For example, the device switches to a high power mode, such as where it is fully operational. In this mode, the device 100 delivers charge to or accepts charge from another device. For example, keeping with the earbuds example of Fig. 3, the batteries 305 of the earbuds 300 would accept a charge delivered by the battery 355 of the case 350. In this regard, the earbuds 300 may retain a full charge or near-full charge, such that the earbuds 300 are ready for immediate use by a consumer.

While in the example of Fig. 5 above the device 100 changed mode by detecting a change from a horizontal to a vertical orientation, it should be understood that other orientations may additionally or alternatively trigger the change. For example, angular rotation, such as for one or more revolutions, or tilting across an x, y, or z axis one or more times may trigger the transition out of shipping mode.

Figs. 6A-6B illustrate further examples, where the electronic device 100 detects a beacon during shipment and remains in the low power mode while the beacon is detected. As shown in Fig. 6A, the electronic device 100 is packed in a shipping container 630. The shipping container 630 includes a transmitter 650 that emits a beacon detected by the electronic device. While the beacon is detected, the electronic device remains in the low power mode and does not accept or deliver charge to other devices. The shipping container 630 may be a smaller package (e.g., a cardboard box), a larger container (e.g., a crate full of numerous boxes, a shipping container able to accept numerous crates, etc.), or any other size package. The transmitter 650 may be a RF transmitter, wireless pairing signal transmitter (e.g., Bluetooth ^{®} or Bluetooth low energy (BLE)), or any other type of transmitter capable of periodically sending a signal to nearby devices.

As shown in Fig. 6B, similar technology may be implemented in a vehicle, such as an airplane 680, in addition or in the alternative to implementing the technology in the shipping box. For example, the airplane 680 or other vehicle (boat, truck, etc.) may include a transmitter 690, which emits a signal detectable by electronic devices shipped as cargo on the airplane 680. The transmitter 690 may be configured similarly to the transmitter 650 of Fig. 6A. In some examples, multiples transmitters 690 may be strategically positioned throughout a cargo area of the airplane 680. Further, the transmitter 690 may emit a higher powered signal, such as to reach electronic devices positioned a further distance away. While electronic devices stored as cargo on the airplane 680 detect the signals emitted by the transmitter 690, they remain in a low power or non-charging state.

When shipping is complete, and the electronic devices are no longer in the container 630 or on the airplane 680 or other vehicle, the electronic devices may no longer detect the signals from the transmitters 650, 690. Accordingly, the electronic devices automatically transitions to a high power or charging state.

The examples of Figs. 5 and 6A-6B above present merely a few examples of how the electronic device may detect surrounding conditions and determine a corresponding mode of operation. The determinations may in other examples be based on any of a number of different types of conditions, such as an amount of light or sound and, additionally, on further types of conditions, such as the state of a physical switch or pull-tab, air pressure, vibration, heat, etc. For example, if an amount of light is below a threshold level, the device may determine that it is still in a shipping box and thus remain in low power mode until the amount of light detected increases above the threshold. As another example, the electronic device 100 may detect a change in air pressure corresponding to being on an airplane, and remain in low power mode until another air pressure change corresponding to landing is detected. As yet another example, a sound may be emitted at a warehouse receiving the shipments of electronic devices. The sound may be, for example, a test tone played at a specific frequency or time. The electronic devices, upon detecting the test tone, may transition to the high power mode. As another example, the electronic devices may detect the sound of an airplane engine, and remain in the low power mode in response. As yet another example, the electronic device 100 may detect movement, such as through the use of GPS, an accelerometer, or any other sensor. Such movement may indicate that the device is in transit, and the device may thus remain in the low power mode. When such detected movement ceases for a predetermined amount of time, such as minutes, hours, or days, the device may transition to the high power mode.

By automatically detecting and changing the state of the electronic devices, the devices may maintain a full or near-full charge and thus be ready for immediate use by consumers. Moreover, the devices may maintain compliance with transportation regulations, such as regulations preventing the charging of one device using another during particular times of an airplane flight.

Unless otherwise stated, the foregoing alternative examples are not mutually exclusive, but may be implemented in various combinations to achieve unique advantages. Further, the same reference numbers in different drawings can identify the same or similar elements.

## Claims

1. A method for controlling a state of an electronic system including a first device (350) including a first battery (355); a second device (300) including a second battery (305), the second battery (305) of the second device (300) adapted to receive a charge from the first battery (355) of the first device (350), the method comprising:
operating, by the first device (350), in a low power mode in which delivery of a charge from the first battery (355) to the second battery (305) is prevented;
detecting, by the first device (350), one or more first conditions corresponding to shipment;
remaining in the low power mode while the one or more first conditions are detected;
detecting, by the first device (350), one or more second conditions corresponding to an end of shipment;
automatically transitioning, by the first device (350), to a high power mode in response to detection of the one or more second conditions, in which high power mode delivery of charge from the first battery (355) to the second battery (305) is enabled, wherein the first and second conditions are detected based on an orientation of the first device (350), based on light or sound sensed by the first device (350), or based on receiving by the first device a beacon from a transportation vehicle.

2. The method of claim 1, further comprising comparing an amount of time during which the first device (100, 300, 350) detects the one or more second conditions to a predetermined threshold, wherein automatically transitioning to the high power mode is only performed when the amount of time meets the predetermined threshold.

3. The method of claim 1, wherein the one or more first conditions include a first orientation, and the one or more second conditions include a second orientation different from the first orientation.

4. The method of claim 1, wherein the one or more first conditions include detection of a particular signal, and the one or more second conditions include non-detection of the particular signal.

5. The method of claim 4, wherein the particular signal is a sound having a predetermined pitch and frequency.

6. The method of claim 1, wherein the one or more first conditions include an amount of light below a predetermined threshold, and the one or more second conditions include an amount of light above the predetermined threshold.

7. The method of claim 1, wherein the first conditions additionally include one or more of, air pressure, heat, movement, or any combination thereof.

8. A system, comprising:
a first device (350) including a first battery (355);
a second device (300) including a second battery (305), the second battery (305) of the second device (300) adapted to receive a charge from the first battery (355) of the first device (350);
one or more sensors (140, 240); and
one or more processors (130) in communication with the one or more sensors (140, 240), the one or more processors (130) configured to:
detect, using the one or more sensors (140, 240), one or more first conditions corresponding to shipment;
detect, using the one or more sensors (140, 240), one or more second conditions corresponding to an end of shipment;
initiate transition of the second device (100, 300) from a low power mode to a high power mode in response to detecting the one or more second conditions, wherein charging the second battery (150, 250, 305) of the second device (100, 300) is disabled in the low power mode and is enabled in the high power mode,
wherein the first and the second conditions are detected based on the orientation of the first device (350), based on light or sound sensed by the first device (350), or based on receiving by the first device (350) a beacon from a transportation vehicle.

9. The system of claim 8, wherein the one or more sensors (140, 240) comprise at least one of an accelerometer (240), a gyroscope, a microphone, a barometer, a light sensor, an RF receiver, or a mechanical switch.

10. The system of claim 8, wherein the second device is a case (350) and the first device is an ear-mounted audio equipment (300).

11. The system of claim 8, further comprising a memory (120) storing a predetermined threshold, wherein the one or more processors (130) are further configured to compare an amount of time during which the one or more processors (130) detect the one or more second conditions to the predetermined threshold, and wherein the one or more processors (130) initiate transmission of the charge only when the amount of time meets the predetermined threshold.

## Patentansprüche

1. Verfahren zum Steuern eines Zustands eines elektronischen Systems, das eine erste Vorrichtung (350) mit einer ersten Batterie (355); eine zweite Vorrichtung (300) mit einer zweiten Batterie (305) beinhaltet, wobei die zweite Batterie (305) der zweiten Vorrichtung (300) dafür ausgelegt ist, eine Ladung von der ersten Batterie (355) der ersten Vorrichtung (350) zu empfangen, das Verfahren umfassend:
Betreiben, durch die erste Vorrichtung (350), in einem Niedrigleistungsmodus, in dem eine Abgabe einer Ladung von der ersten Batterie (355) an die zweite Batterie (305) verhindert wird;
Erkennen, durch das erste Gerät (350), einer oder mehrerer erster Bedingungen, die eine Lieferung entsprechen;
Verbleiben in dem Niedrigleistungsmodus, während die eine oder die mehreren ersten Bedingungen erkannt werden;
Erkennen, durch die erste Vorrichtung (350), einer oder mehrerer zweiter Bedingungen, die einem Ende der Lieferung entsprechen;
automatisches Wechseln, durch die erste Vorrichtung (350) in Reaktion auf eine Erkennung der einen oder der mehreren zweiten Bedingungen, in einen Hochleistungsmodus, in dem eine Hochleistungsmodus-Ladungsabgabe von der ersten Batterie (355) an die zweite Batterie (305) aktiviert ist, wobei die erste und die zweite Bedingung basierend auf einer Ausrichtung der ersten Vorrichtung (350), basierend auf Licht oder Geräuschen, die von der ersten Vorrichtung (350) erfasst werden, oder basierend auf einem Empfangen eines Bakensignals durch die erste Vorrichtung von einem Transportfahrzeug erkannt werden.

2. Verfahren nach Anspruch 1, das ferner ein Vergleichen einer Zeitdauer, über die hinweg die erste Vorrichtung (100, 300, 350) die eine oder die mehreren zweiten Bedingungen erkennt, mit einem vorbestimmten Schwellenwert umfasst, wobei ein automatisches Wechseln in den Hochleistungsmodus nur dann durchgeführt wird, wenn die Zeitdauer den vorbestimmten Schwellenwert erfüllt.

3. Verfahren nach Anspruch 1, wobei die eine oder die mehreren ersten Bedingungen eine erste Ausrichtung beinhalten und die eine oder die mehreren zweiten Bedingungen eine zweite Ausrichtung beinhalten, die sich von der ersten Ausrichtung unterscheidet.

4. Verfahren nach Anspruch 1, wobei die eine oder die mehreren ersten Bedingungen eine Erkennung eines bestimmten Signals beinhalten und die eine oder die mehreren zweiten Bedingungen ein Nichterkennen des bestimmten Signals beinhalten.

5. Verfahren nach Anspruch 4, wobei das bestimmte Signal ein Geräusch ist, das eine vorbestimmte Tonhöhe und Frequenz aufweist.

6. Verfahren nach Anspruch 1, wobei die eine oder die mehreren ersten Bedingungen eine Lichtmenge unterhalb eines vorbestimmten Schwellenwerts beinhalten und die eine oder die mehreren zweiten Bedingungen eine Lichtmenge oberhalb des vorbestimmten Schwellenwerts beinhalten.

7. Verfahren nach Anspruch 1, wobei die ersten Bedingungen zusätzlich eines oder mehrere von Luftdruck, Wärme, Bewegung oder einer beliebigen Kombination davon beinhalten.

8. System, umfassend:
eine erste Vorrichtung (350), die eine erste Batterie (355) beinhaltet;
eine zweite Vorrichtung (300), die eine zweite Batterie (305) beinhaltet, wobei die zweite Batterie (305) der zweiten Vorrichtung (300) dafür ausgelegt ist, eine Ladung von der ersten Batterie (355) der ersten Vorrichtung (350) zu empfangen;
einen oder mehrere Sensoren (140, 240); und
einen oder mehrere Prozessoren (130) in Kommunikation mit dem einen oder den mehreren Sensoren (140, 240), wobei der eine oder die mehreren Prozessoren (130) konfiguriert sind zum:
Erkennen, unter Nutzung des einen oder der mehreren Sensoren (140, 240), einer oder mehrerer erster Bedingungen, die einer Lieferung entsprechen;
Erkennen, unter Nutzung des einen oder der mehreren Sensoren (140, 240), einer oder mehrerer zweiter Bedingungen, die einem Ende der Lieferung entsprechen;
Initiieren eines Wechselns der zweiten Vorrichtung (100, 300) von einem Niedrigleistungsmodus in einen Hochleistungsmodus in Reaktion auf das Erkennen der einen oder mehreren zweiten Bedingungen, wobei das Laden der zweiten Batterie (150, 250, 305) der zweiten Vorrichtung (100, 300) in dem Niedrigleistungsmodus deaktiviert und in dem Hochleistungsmodus aktiviert wird,
wobei die ersten und die zweiten Bedingungen basierend auf der Ausrichtung der ersten Vorrichtung (350), basierend auf Licht oder Geräuschen, die von der ersten Vorrichtung (350) erfasst werden, oder basierend auf dem Empfangen eines Bakensignals von einem Transportfahrzeug durch die erste Vorrichtung (350) erkannt werden.

9. System nach Anspruch 8, wobei der eine oder die mehreren Sensoren (140, 240) zumindest eines von einem Beschleunigungsmesser (240), einem Gyroskop, einem Mikrofon, einem Barometer, einem Lichtsensor, einem HF-Empfänger oder einem mechanischen Schalter umfassen.

10. System nach Anspruch 8, wobei die zweite Vorrichtung ein Gehäuse (350) ist und die erste Vorrichtung ein am Ohr angebrachtes Audiogerät (300) ist.

11. System nach Anspruch 8, das ferner einen Speicher (120) umfasst, der einen vorbestimmten Schwellenwert speichert, wobei der eine oder die mehreren Prozessoren (130) ferner konfiguriert sind, eine Zeitdauer, über die hinweg der eine oder die mehreren Prozessoren (130) die eine oder die mehreren zweiten Bedingungen erkennen, mit dem vorbestimmten Schwellenwert zu vergleichen, und wobei der eine oder die mehreren Prozessoren (130) eine Übertragung der Ladung nur dann initiieren, wenn die Zeitdauer den vorbestimmten Schwellenwert erfüllt.

## Revendications

1. Procédé de commande d'un état d'un système électronique comportant un premier dispositif (350) comportant une première batterie (355) ; un deuxième dispositif (300) comportant une deuxième batterie (305), la deuxième batterie (305) du deuxième dispositif (300) étant adaptée pour recevoir une charge depuis la première batterie (355) du premier dispositif (350), le procédé comprenant :
le fonctionnement, par le premier dispositif (350), dans un mode basse puissance dans lequel l'apport d'une charge de la première batterie (355) à la deuxième batterie (305) est empêché ;
la détection, par le premier dispositif (350), d'une ou de plusieurs premières conditions correspondant à un embarquement ;
le fait de rester dans le mode basse puissance tandis que les une ou plusieurs premières conditions sont détectées ;
la détection, par le premier dispositif (350), d'une ou de plusieurs deuxièmes conditions correspondant à une fin d'embarquement ;
la transition automatique, par le premier dispositif (350), vers un mode haute puissance en réponse à la détection des une ou plusieurs deuxièmes conditions, dans lequel l'apport de charge en mode haute puissance de la première batterie (355) à la deuxième batterie (305) est activé, dans lequel les premières et deuxièmes conditions sont détectées sur la base d'une orientation du premier dispositif (350), sur la base de la lumière ou du son détecté par le premier dispositif (350), ou sur la base de la réception par le premier dispositif d'une balise depuis un véhicule de transport.

2. Procédé selon la revendication 1, comprenant en outre la comparaison d'un laps de temps pendant lequel le premier dispositif (100, 300, 350) détecte les une ou plusieurs deuxièmes conditions à un seuil prédéterminé, dans lequel la transition automatique vers le mode haute puissance est réalisée uniquement lorsque le laps de temps atteint le seuil prédéterminé.

3. Procédé selon la revendication 1, dans lequel les une ou plusieurs premières conditions comportent une première orientation, et les une ou plusieurs deuxièmes conditions comportent une deuxième orientation différente de la première orientation.

4. Procédé selon la revendication 1, dans lequel les une ou plusieurs premières conditions comportent la détection d'un signal particulier, et les une ou plusieurs deuxièmes conditions comportent la non-détection du signal particulier.

5. Procédé selon la revendication 4, dans lequel le signal particulier est un son ayant une hauteur tonale et une fréquence prédéterminées.

6. Procédé selon la revendication 1, dans lequel les une ou plusieurs premières conditions comportent une quantité de lumière inférieure à un seuil prédéterminé, et les une ou plusieurs deuxièmes conditions comportent une quantité de lumière supérieure au seuil prédéterminé.

7. Procédé selon la revendication 1, dans lequel les premières conditions comportent également un ou plusieurs parmi une pression d'air, une chaleur, un déplacement ou une combinaison quelconque de ceux-ci.

8. Système, comprenant :
un premier dispositif (350) comportant une première batterie (355) ;
un deuxième dispositif (300) comportant une deuxième batterie (305), la deuxième batterie (305) du deuxième dispositif (300) étant adaptée pour recevoir une charge depuis la première batterie (355) du premier dispositif (350) ;
un ou plusieurs capteurs (140, 240) ; et
un ou plusieurs processeurs (130) en communication avec les un ou plusieurs capteurs (140, 240), les un ou plusieurs processeurs (130) étant configurés pour :
détecter, à l'aide des un ou plusieurs capteurs (140, 240), une ou plusieurs premières conditions correspondant à un embarquement ;
détecter, à l'aide des un ou plusieurs capteurs (140, 240), une ou plusieurs deuxièmes conditions correspondant à une fin d' embarquement ;
déclencher une transition du deuxième dispositif (100, 300) d'un mode basse puissance vers un mode haute puissance en réponse à la détection des une ou plusieurs deuxièmes conditions, dans lequel la charge de la deuxième batterie (150, 250, 305) du deuxième dispositif (100, 300) est désactivée dans le mode basse puissance et est activée dans le mode haute puissance,
dans lequel les premières et deuxièmes conditions sont détectées sur la base de l'orientation du premier dispositif (350), sur la base de la lumière ou du son détecté par le premier dispositif (350), ou sur la base de la réception par le premier dispositif (350) d'une balise depuis un véhicule de transport.

9. Système selon la revendication 8, dans lequel les un ou plusieurs capteurs (140, 240) comprennent au moins l'un parmi un accéléromètre (240), un gyroscope, un microphone, un baromètre, un capteur de lumière, un récepteur RF ou un commutateur mécanique.

10. Système selon la revendication 8, dans lequel le deuxième dispositif est un boîtier (350) et le premier dispositif est un équipement audio monté sur l'oreille (300).

11. Système selon la revendication 8, comprenant en outre une mémoire (120) stockant un seuil prédéterminé, dans lequel les un ou plusieurs processeurs (130) sont en outre configurés pour comparer un laps de temps pendant lequel les un ou plusieurs processeurs (130) détectent les une ou plusieurs deuxièmes conditions au seuil prédéterminé, et dans lequel les un ou plusieurs processeurs (130) déclenchent la transmission de la charge uniquement lorsque le laps de temps atteint le seuil prédéterminé.
